# EUROPEAN PATENT APPLICATION

(11) **EP 1 522 948 A1**
(43) Date of publication of application: **13.04.2005**
(21) Application number: 03292511.7
(22) Date of filing: 10.10.2003
(51) Int. Cl.: G06K 1/12

(54) **Method for generating barcode patterns**

(71) Applicant: JetMobile SAS, 92130 Issy les Moulineaux (FR)
(72) Inventor: d'Estalenx, Jean-François, 75116 Paris (FR)
(74) Representative: Callon de Lamarck, Jean-Robert

(57) **Abstract**

The invention relates to a method for generating a composite barcode pattern (1) on an output device(30), characterized in that it comprises the steps consisting of:
- reading (10) a list of at least two barcode symbologies to be put in the composite barcode pattern to be generated, the list being in an instruction sequence sent to operating means of the output device;
- reading (12) in the instruction sequence the data to be encoded in the composite barcode pattern;
- cutting (13) the instruction sequence to dispatch the data to each symbology;
- calculating (19A) and generating the pattern for a first symbology based on the parameters included in the instruction sequence;
- calculating (19B) and generating the pattern for a next symbology in function of the pattern of the at least one previous symbology; and
- repeating the previous step (19B) until there is no pattern to calculate and generate in the instruction sequence.

The invention also relates to a device for the performing of such a method and a data support thereof.

## Description

### FIELD OF THE INVENTION.

The invention relates to barcode patterns. More precisely, the invention relates to a method, a device and a data support for the generation of barcode patterns.

### BACKGROUND OF THE INVENTION.

The use of barcode patterns has been known for years. These patterns encode a reference of a product under the form of black and white stripes of different widths. They are used on many products, of all sorts, and allow quick identification of the product by an optical sensor linked to a computer or the like.

There are numerous types of barcodes, differing by their widths, their heights, the type of information they encode, etc. The type of the barcode pattern is called the "barcode symbology".

According to a known generation method, implemented on output devices like printers for instance, a barcode pattern generation function is invoked by operating means of the output devices. The generation function uses an instruction sequence of characters indicating the barcode symbology to use, together with parameters, such as the bar width or height to use.

The printers can of course use laser, ink-jet, impact or any other technology.

The above-mentioned method works for simple barcode patterns.

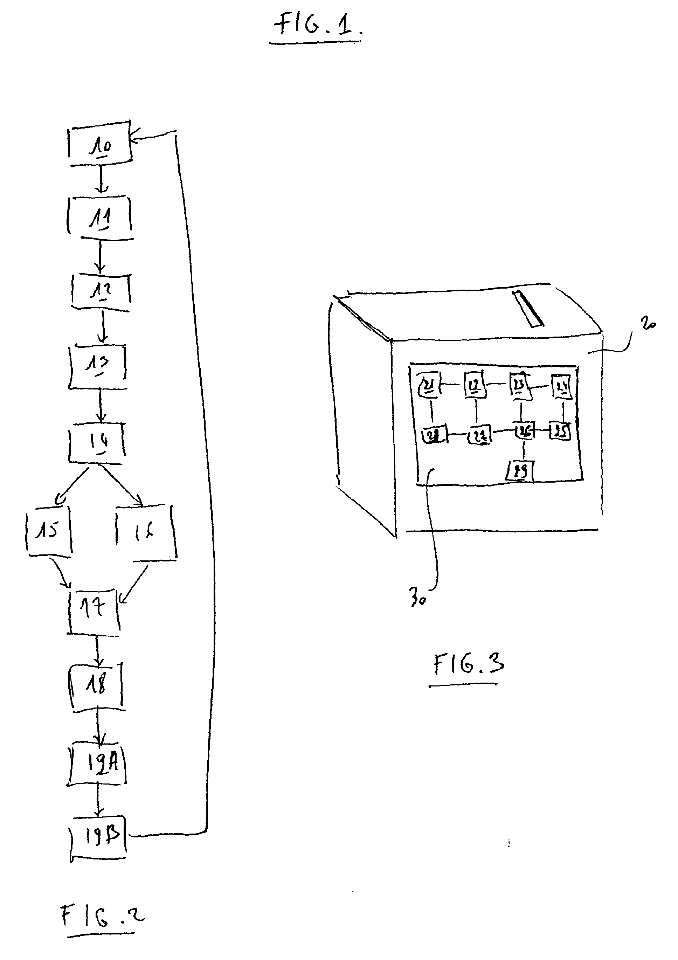

There are now composite barcode patterns mixing multiple symbologies within one global pattern. In figure 1, it is shown an example of a composite pattern, where a first symbology 1 is longitudinally adjacent to a second symbology 2. The resulting pattern is called a "composite" pattern.

The composite patterns are more and more used, and they need to be generated and printed in a secure manner.

However, if the barcode is composite, the existing barcode invoking system cannot work. Existing systems only work if the barcode pattern is made of one unique symbology.

Many barcode patterns can encode a variable number of characters. The size of the barcodes is thus variable and directly dependant on that number of characters.

Many barcode symbologies also feature data compression. This compression makes it impossible to guess the final size of the pattern encoding those characters before printing.

That is why existing applications run on the known output devices must manage individually the various parts of the composite barcode pattern. The sequential generation of multiple barcodes to generate one final composite barcode does not guarantee a perfect readability and quality in all cases and for all data. There are frequent pattern overlaps, and consequently frequent invalid composite barcode reading.

Current systems also require the sending of as many activation commands and positioning commands as there are barcodes in the composite barcode pattern. This multiple sending leads to slower communication between the systems that send the commands and the printers that print the composite patterns.

### PRESENTATION OF THE INVENTION.

The aim of the invention is to overcome those drawbacks.

It is one object of the invention to provide an efficient and reliable method for the generation of composite barcode pattern.

It is therefore an object of the invention to provide a method that allows the generation of a perfect composite barcode pattern, without any overlap or miss-sizing, and this in all cases.

It is thus an object of the invention to provide a method that can handle instructions for the generation of a composite barcode pattern.

It is a further object of the invention to provide a method for the rapid generation of composite barcode pattern.

It is a further object of the invention to provide a method in which only one command of activation and one command of positioning are sent to the composite barcode generation device.

It is also an object of the invention to provide a device on which the method can be implemented, and a data support on which data concerning the method can be stored.

To reach those objects, the invention proposes a method for generating a composite barcode pattern on an output device, characterized in that it comprises the steps consisting of:
- reading a list of at least two barcode symbologies to be put in the composite barcode pattern to be generated, the list being in an instruction sequence sent to operating means of the output device;
- reading in the instruction sequence the data to be encoded in the composite barcode pattern;
- cutting the instruction sequence to dispatch the data to each symbology;
- calculating and generating the pattern for a first symbology based on the parameters included in the instruction sequence;
- calculating and generating the pattern for a next symbology in function of the pattern of the at least one previous symbology; and
- repeating the previous step until there is no pattern to calculate and generate in the instruction sequence.

The invention is to advantage completed by the following steps, taken one by one, or taken in any possible combination thereof:
- setting generation parameters of the symbologies according to generation parameters of the first symbology met in the list of the instruction sequence;
- choosing as generation parameters at least the height of the bars, the width of the bars, the colour of the bars and the display of the barcode values directly readable data on the barcode pattern;
- defining the generation parameters in a same sequence where they follow each other, just before the list of symbologies in the instruction sequence;
- putting all the symbologies to be used in a same sequence where they follow each other in the order of their appearance in the composite barcode from bottom to top;
- writing the instruction sequence with characters and values and representing each symbology by a single value;
- writing the data to be encoded in the composite barcode pattern under the form of a sequence of characters;
- putting the sequence of characters representing the data after the list of symbologies;
- ending a sequence relating to a given type of symbology by a specific character related to this symbology;
- determining if the size of data for a symbology met in the list of the instruction sequence is fixed or variable and:
   - when the size of data is fixed, extracting automatically the data for the next symbologies from the position following the last specific character of the previous barcode pattern; or
   - when the size of data is variable, triggering the end of data for said symbology by the end of the data or by at least one specific character, and then going to the next symbology;
   - analyzing the compliance of the data for each barcode symbology with display specifications;
   - performing data compression of at least one symbology; and
   - writing the instruction sequence under the form of an "escape" sequence.

### DRAWINGS.

The following drawings are illustrative of possible methods and devices according to the invention and are not intended to limit the invention:
- Figure 1, already discussed, shows an example of an existing composite barcode pattern;
- Figure 2 is a block diagram showing the steps of an example of a method according to the invention;
- Figure 3 is a schematic elevation view of a device on which the method can be implemented.

### DETAILED DESCRIPTION.

The invention allows the generation and printing of a composite barcode pattern, the composite pattern being according to figure 1 for instance.

Figure 2 represents the main steps of a method according to the invention. Figure 3 represents a schematic elevation view of a device on which the method can be implemented.

The method for generating a composite barcode pattern on an output device 20 represented in figure 3.

The device 20 comprises means 21 for reading a list of at least two barcode symbologies to be put in the composite barcode pattern to be generated by the device 20. This first step is referred to as step 10.

The list is located in an instruction sequence sent to operating means 30 of the output device 20.

The instruction sequence can be written in any language that can be understood by the operating means 30.

However, to advantage, the instruction sequence, and more specifically the list of symbologies, is written in an instruction syntax made of characters and values, where each symbology has a unique number.

The language is preferentially an "escape" language.

The escape language is written as a sequence of bytes.

An example of sequence can be as follows:
<Esc>(s#T; where # represents generation parameters - in this example the values of the symbologies - and <Esc> represents the ASCII (American Standard Code for Information Interchange) character of value 27.

Therefore, means 21 read a sequence ended with 'T'. This sequence represents the list of all barcode symbologies present in the composite barcode to be generated. That sequence details all the symbologies to use in the final composite barcode.

In a preferred method, the symbologies are represented by ASCII numbers. Each symbology is preferentially represented by a single value.

To advantage, all symbology values to be used follow each other in the order of their appearance in the composite barcode, from bottom to top. In the example that we chose to describe, the numbers of each symbology in the sequence are separated by commas.

Therefore, the sequence could be written as:
<Esc>(s24600,24815T to simultaneously use symbologies number 24600 and 24815.

In a preferred method, step 11 consists of setting generation parameters of the symbologies according to generation parameters of the first symbology met in the list of the instruction sequence.

Generation parameters are preferentially at least the height of the bars, the width of the bars, the colour of the bars and the display of the barcode values directly readable on the barcode pattern. Other parameters can of course be added to those parameters.

Those parameters are optionally defined in the same sequence, just before the list of symbologies. Therefore, the instruction sequence can be as follows:
<Esc>(s#p#h#v#b#c#s#T where:
   - 'p' and 'h' allow the control of the display of the barcode values directly readable on the barcode pattern. Those values are often Roman figures at the bottom of a barcode pattern;
   - 'v' and 'b' allow the control of the width and the height of the barcode pattern; and
   - 'c' allows the control of the colour of the barcode pattern and its background.

Those parameters have default values if they are not defined in the sequence.

In step 12, means 22 of the operating means 30 read the data to be encoded in the composite barcode pattern in the instruction sequence.

Preferentially, the symbologies and parameters analyzed in steps 10 and 11 are followed by another sequence of characters with all the data to encode in the final composite barcode. The data to encode is for instance a reference of a product on which the barcode pattern will be put.

In the example of the present specification, the end of the data for each symbologie in this other sequence is defined by the type of symbology which is used. Therefore, there is an ending of a sequence relating to a given type of symbology by a specific character related to this symbology. For instance:
- in numeric only barcodes, the data are ended with a byte of value 32, 10, 12, 13, 27 or ASCII character not included between 48 and 57; and
- in alphanumeric barcode, the data are ended with a byte of value 32, 10, 12, 13 or 27.

In step 13, the instruction sequence received from step 12 is cut to dispatch the data to each symbology. This step 13 is done my means 23 of device 20.

This cutting is preferentially realized by an algorithm, this algorithm extracting from the complete sequence the data for each symbology.

This algorithm reads sequentially each individual character to encode as a barcode, until it finds a character that cannot be processed by the current symbology, or a special character that triggers the end of the current barcode, or has enough characters to generate the barcode in case it encodes a fixed number of characters.

In step 14, it is determine by means 24 if the size of data for the first symbology is fixed or variable.

If the size of data is fixed, it is proceeded to step 15 and means 25 extract automatically the data for the next symbologies from the position following the last specific character of the previous barcode pattern.

If the size of data is variable, it is proceeded to step 16 and means 26 trigger the end of data for said symbology by the end of the data or by at least one specific character. The next symbology is then taken into account. The at least one specific character is for instance two successive bytes of ASCII value 124 (decimal).

In step 17, means 27 analyse, and this for each barcode symbology, compliance of the data with the maximum/minimum specifications.

The specifications can be the data length and the validity of each character within the data.

If any incompliance is found, an error message detailing the error is printed below the composite barcode and the pattern is made unreadable with the addition of a pattern stopping any reading attempt.

In step 18, means 28 perform data compression if this is required by the symbology, so that the computer software does not have to perform it.

In step 19A, means 29 calculate and generate the pattern for the first symbology included in the composite barcode, based on the parameters included in the instruction sequence received in step 10.

In step 19B, means 29 calculate and generate the pattern for the next symbology included in the composite barcode, based on the colour, height and width of the first symbology part of the composite barcode.

The calculations are known by the man skilled in the art, because the symbologies of barcode patterns comply with international standards.

The additional pattern can then be positioned perfectly on top of the previous barcode, not overlapping it or being larger.

Step 19B is repeated until there is no more symbology to add to the final composite barcode pattern, in which case the composite barcode is finished and produced.

The invention waits for a new command for step 10.

The invention relates as well to a data support that, when linked to operating means of a computer, enables a composite barcode pattern output device to perform the steps 10 to 19B described in above.

The invention has numerous advantages.

The method uses one unique activation sequence and positioning sequence.

The instruction sequence is to advantage of limited size and guarantees a perfect composite barcode pattern generation. That is to say that the generation of the composite bar code is done without any overlap or miss-sizing.

The generation is perfect in any condition and for all data.

The invention also facilitates greatly the generation of complex barcodes by computer software.

Indeed, a given computer software receives just in two commands both:
- the request for the generation of all symbologies present in the composite barcode, and
- the data for those symbologies.

The invention can then take care of all possible technical incompatibilities between the symbologies, such as physical size or positioning, which could result in an unreadable or incomplete pattern.

## Claims

1. A method for generating a composite barcode pattern (1) on an output device(30), **characterized in that** it comprises the steps consisting of:
- reading (10) a list of at least two barcode symbologies to be put in the composite barcode pattern to be generated, the list being in an instruction sequence sent to operating means of the output device;
- reading (12) in the instruction sequence the data to be encoded in the composite barcode pattern;
- cutting (13) the instruction sequence to dispatch the data to each symbology;
- calculating (19A) and generating the pattern for a first symbology based on the parameters included in the instruction sequence;
- calculating (19B) and generating the pattern for a next symbology in function of the pattern of the at least one previous symbology; and
- repeating the previous step (19B) until there is no pattern to calculate and generate in the instruction sequence.

2. A method according to claim 1, **characterized in that** it comprises the step consisting of setting (11) generation parameters of the symbologies according to generation parameters of the first symbology met in the list of the instruction sequence.

3. A method according to claim 2, **characterized in that** it comprises the step consisting of choosing as generation parameters at least the height of the bars, the width of the bars, the colour of the bars and the display of the barcode values directly readable on the barcode pattern.

4. A method according to claim 3, **characterized in that** it comprises the step consisting of defining the generation parameters in a same sequence where they follow each other, just before the list of symbologies in the instruction sequence.

5. A method according to claims 1 to 4, **characterized in that** it comprises the step consisting of putting all the symbologies to be used in a same sequence where they follow each other in the order of their appearance in the composite barcode from bottom to top.

6. A method according to claims 1 to 5, **characterized in that** it comprises the steps consisting of writing the instruction sequence with characters and values and representing each symbology by a single value.

7. A method according to claims 1 to 6, **characterized in that** it comprises the step consisting of writing the data to be encoded in the composite barcode pattern under the form of a sequence of characters.

8. A method according to claim 7, **characterized in that** it comprises the step consisting of putting the sequence of characters representing the data after the list of symbologies.

9. A method according to claims 7 or 8, **characterized in that** it comprises the step consisting of ending a sequence relating to a given type of symbology by a specific character related to this symbology.

10. A method according to claim 9, **characterized in that** it comprises the steps consisting of determining (14) if the size of data for a symbology met in the list of the instruction sequence is fixed or variable and:
- when the size of data is fixed, extracting (15) automatically the data for the next symbologies from the position following the last specific character of the previous barcode pattern; or
- when the size of data is variable, triggering (16) the end of data for said symbology by the end of the data or by at least one specific character, and then going to the next symbology.

11. A method according to claims 7 to 10, **characterized in that** it comprises the step consisting of analyzing (17) the compliance of the data for each barcode symbology with display specifications.

12. A method according to claims 1 to 11, **characterized in that** it comprises the step consisting of performing (18) data compression of at least one symbology.

13. A method according to claims 1 to 12, **characterized in that** it comprises the step consisting of writing the instruction sequence under the form of an "escape" sequence.

14. An output device (30) comprising means (20) for generating a composite barcode pattern, **characterized in that** it comprises:
- means for reading (21) a list of at least two barcode symbologies to be put in the composite barcode pattern to be generated in an instruction sequence;
- means for reading (22) in the instruction sequence the data to be encoded in the composite barcode pattern;
- means for cutting (23) the instruction sequence to dispatch the data to each symbology;
- means for calculating (29) and generating the pattern for a first symbology based on the parameters included in the instruction sequence;
- means for calculating (29) and generating the pattern for a next symbology in function of the pattern of the at least one previous symbology; and
- means for repeating the previous step until there is no pattern to calculate and generate in the instruction sequence.

15. An output device according to claim 14, **characterized in that** it comprises means for interpreting the instruction sequence written under the form of characters and values into generation parameters of the composite pattern.

16. An output device according to claims 14 or 15, **characterized in that** it comprises means (24) for determining if the size of data for a symbology met in the list of the instruction sequence is fixed or variable and means (25, 26) for extracting the data for each symbology.

17. An output device according to claims 14 to 16, **characterized in that** it comprises means (27) for analyzing the compliance of the data for each barcode symbology with display specifications.

18. An output device according to claims 14 to 17, **characterized in that** it comprises means (28) for performing data compression of at least one symbology.

19. An output device according to claims 14 to 18, **characterized in that** it comprises means for reading an "escape" sequence.

20. An output device according to claims 14 to 19, **characterized in that** it is a printer.

21. A data support comprising a program, **characterized in that**, when linked to operating means of a computer, it enables a composite barcode pattern output device to perform the step of:
- reading (10) a list of at least two barcode symbologies to be put in the composite barcode pattern to be generated, the list being in an instruction sequence sent to operating means of the output device;
- reading (12) in the instruction sequence the data to be encoded in the composite barcode pattern;
- cutting (13) the instruction sequence to dispatch the data to each symbology;
- calculating (19A) and generating the pattern for a first symbology based on the parameters included in the instruction sequence;
- calculating (19B) and generating the pattern for a next symbology in function of the pattern of the at least one previous symbology; and
- repeating the previous step (19B) until there is no pattern to calculate and generate in the instruction sequence.

22. A data support according to claim 21, **characterized in that** it further enables an output device to perform the method according to claims 2 to 13.
